(19) Europäisches Patentamt
European Patent Office
Office européen des brevets

(11) Veröffentlichungsnummer: **0 169 807**
**B1**

(12) # EUROPÄISCHE PATENTSCHRIFT

(45) Veröffentlichungstag der Patentschrift: **05.12.90**

(51) Int. Cl.$^5$: **C 08 G 69/26**, C 08 G 69/36

(21) Anmeldenummer: **85810327.8**

(22) Anmeldetag: **18.07.85**

(54) **Polyamide, Verfahren zu deren Herstellung und deren Verwendung.**

(30) Priorität: **24.07.84 CH 3576/84**

(43) Veröffentlichungstag der Anmeldung:
**29.01.86 Patentblatt 86/05**

(45) Bekanntmachung des Hinweises auf die Patenterteilung:
**05.12.90 Patentblatt 90/49**

(84) Benannte Vertragsstaaten:
**CH DE FR GB IT LI NL**

(56) Entgegenhaltungen:
**EP-A-0 001 786**
**CH-A- 498 893**
**DE-A-2 449 713**
**DE-A-2 846 501**
**DE-A-2 846 514**

(73) Patentinhaber: **CIBA-GEIGY AG**
**Klybeckstrasse 141**
**CH-4002 Basel (CH)**

(72) Erfinder: **Pfeifer, Josef, Dr.**
**Brunnmattstrasse 32**
**CH-4106 Therwil (CH)**

**EP 0 169 807 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft thermoplastische kristalline Polyamide aus kondensierten cyclischen Dicarbonsäuren, 1,10-Sekundäralkyl substituierten 1,10-Diaminodecanen und gegebenenfalls Aminocarbonsäuren, anderen Dicarbonsäuren und Diaminen, ein Verfahren zu deren Herstellung und deren Verwendung als Formmassen in thermoplastischen Formgebungsverfahren.

Polyamide auf der Basis von Alkylendiaminen mit sperrigen Substituenten in der Alkylenkette sind im allgemeinen transparent und amorph. Solche Polyamide sind z.B. aus der DE—A—2,846,501 und aus der DE—A—2,846,514 bekannt.

Kristalline Polyamide aus Terephthalsäure und 1,10-Sekundäralkyl substituierten 1,10-Diaminodecanen sind in der EP—B1—0001786 abeschrieben. Diese Polyamide weisen teilweise so hohe Schmelzpunkte auf, dass sie nach den für Thermoplaste üblichen Formgebungsverfahren nicht verarbeitet werden können.

Gegenstand vorliegendfer Erfindung ist ein teilkristallines Polyamid aus Dicarbonsäuren, Diaminen und gegebenenfalls Aminocarbonsäuren mit einer reduzierten Lösungsviskosität von mindestens 0,3 dl/g, gemessen an einer 0,5%-igen Lösung in m-Kresol bei 25°C, dadurch gekennzeichnet, dass es aus 80 bis 100 Mol-%, bezogen auf das Polyamid, mindestens eines wiederkehrenden Strukturelementes der Formel I

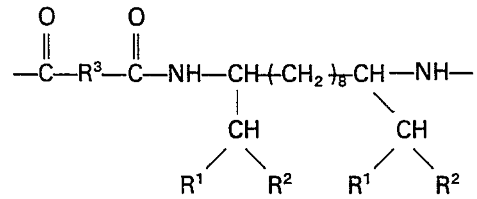

(I)

und aus 20 bis 0 Mol-mindestens eines wiederkehrenden Strukturelementes der Formeln II und/oder IIa

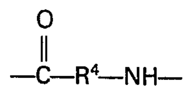

(II)

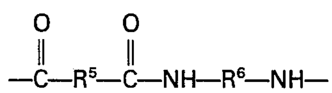

(IIa)

worin $R^1$ Alkyl mit 1 bis 4 C-Atomen und $R^2$ Alkyl mit 1 bis 8 C-Atomen oder $R^1$ und $R^2$ zusammen Tri-, Tetra- oder Pentamethylen sind, $R^3$ einen Rest der Formeln

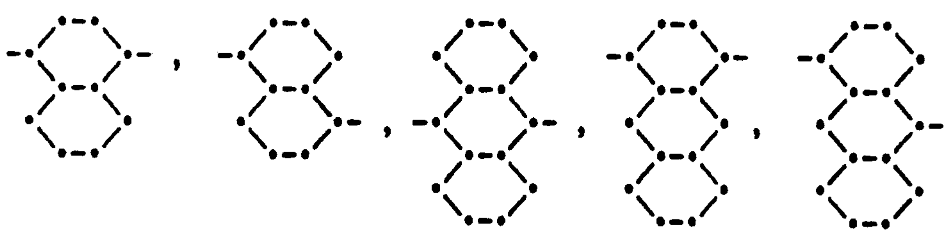

bedeutet, wobei die Sechsringe aliphatische oder aromatische Kohlenwasserstoffreste sind, $R^4$ für Alkylen mit 5 bis 11 C-Atomen steht, $R^5$ einen aliphatischen Rest mit 2 bis 12 C-Atomen oder einen aromatischen Kohlenwasserstoffrest mit 6 bis 12 C-Atomen darstellt, und $R^6$ lineares Alkylen mit 2 bis 12 C-Atomen, ein cycloaliphatischer oder araliphatischer Ret ist, besteht.

Die reduzierte Lösungsviskosität beträgt bevorzugt 0,3 bis 2,5 und besonders 0,4 bis 1,5. Vorzugsweise enthält das Polyamid 0 bis 10 Mol-% Strukturelemente der Formeln II und/oder IIa und besonders ist das Polyamid ein Homopolyamid mit 100 Mol-% Strukturelementen der Formel I.

$R^2$ und $R^2$ können lineares ode verzweigtes Alkyl sein. Bevorzugt sind $R^1$ und $R^2$ lineares Alkyl. In einer bevorzugten Ausführungsform sind $R^1$ und $R^2$ $C_2$—$C_4$-Alkyl und besonders $C_1$—$C_2$-Alkyl. Beispiele für Alkyl sind Methyl, Ethyl, n-Propyl, i-Propyl, n-Butyl, sek.-Butyl, n-Pentyl, n-Hexyl, n-Heptyl und n-Octyl. $R^1$ und $R^2$

zusammen als Alkylen sind bevorzugt Trimethylen, besonders Tetramethylen und ganz besonders Pentamethylen.

$R^3$ kann z.B. den folgenden Formeln entsprechen:

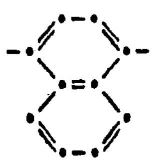 , 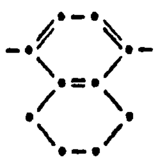 , 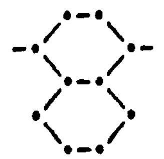 , 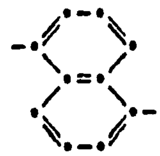 , 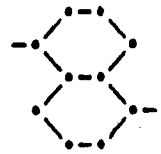 ,

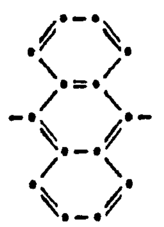 , 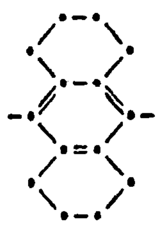 , 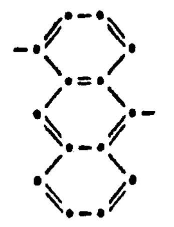 und 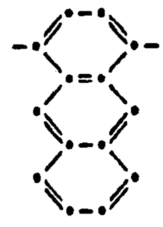 .

Bevorzugt ist $R^3$ als 9,10-Anthracenylen, 1,5-Naphthylen und besonders als 1,4-Naphthylen.

Stellt $R^5$ einen aliphatischen Rest dar, so handelt es sich insbesondere um geradkettiges Alkylen mit 2—12 C-Atomen und bevorzugt um geradkettiges Alkylen mit 4—10 C-Atomen, Alkylengruppen $R^6$ weisen bevorzugt 2—10 C-Atome auf.

Durch $R^5$ dargestellte aromatische Kohlenwasserstoffreste können unsubstituiert oder substituiert sein, beispielsweise durch Alkylgruppen mit 1—4 C-Atomen. Dabei handelt es sich zum Beispiel um monocyclische, um kondensierte polycyclische oder um unkondensierte bicyclische aromatische Reste, wobei bei letzteren die Aromatenkerne auch über ein Brückenglied, wie —O—, —S—, —$CH_2$— oder $SO_2$—, miteinander verbunden sein können. $R^5$ stellt insbesondere einen 4,4'-Biphenylen-, 4,4'-Diphenylether- oder 4,4'-Diphenylsulfonrest und vor allem die 1,3-Phenylengruppe und ganz bevorzugt die 1,4-Phenylengruppe dar.

$R^6$ in der Bedeutung eines cycloaliphatischen Restes stellt z.B. die 1,3-Cyclopentylen-, die 1,3- oder 1,4-Cyclohexylen- oder die 4,4'-Dicyclohexylmethangruppe dar, während $R^6$ als araliphatischer Rest vor allem 1,3-Xylylen ist.

$R^4$ als Alkylen ist vorzugsweise linear und kann zum Beispiel 1,5-Pentylen, 1,6-Hexylen. 1,7-Heptylen, 1,8-Octylen, 1,9-Nonylen, 1,10-Decylen und 1,11-Undecylen sein.

Bevorzugt werden Polyamide mit wiederkehrenden Strukturelementen der Formel I, worin $R^1$ und $R^2$ Methyl oder Ethyl oder $R^1$ und $R^2$ zusammen Tetra- oder Pentamethylen sind.

In einer besonders bevorzugten Ausführungsform ist das Polyamid ein solches mit wiederkehrenden Strukturelementen der Formel

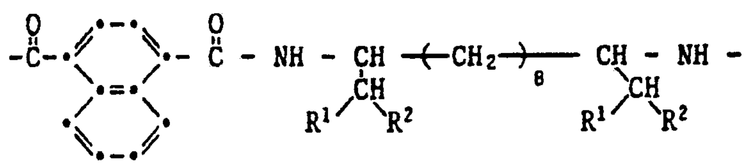 (Ia)

worin $R^1$ für Methyl, $R^2$ für Methyl oder Ethyl oder $R^1$ und $R^2$ zusammen für Tri- oder Tetramethylen stehen.

Ganz besonders bevorzugt werden Polyamide mit wiederkehrenden Strukturelementen der Formel Ia, worin $R^1$ und $R^2$ zusammen für Pentamethylen stehen.

Ein weiterer Gegenstand der Erfindung ist ein Verfahren zur Herstellung von Polyamiden, dadurch gekennzeichnet ist, das man 40 bis 50 Mol-% einer Dicarbonsäure der Formel III

$$HOOC—R^3—COOH \qquad (III)$$

und 10 bis 0 Mol-% einer Aminocarbonsäure der Formel IV oder einer Dicarbonsäure der Formel V

$$HOOC—R^4—NH_2 \qquad (IV)$$

$$HOOC—R^5—COOH \qquad (V)$$

oder deren polyamidbildenden Derivate, mit 40 bis 50 Mol-% eines Diamines der Formel VI

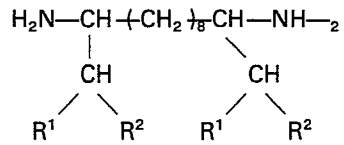

(VI)

und 10 bis 0 Mol-% eines Diamins der Formel VII

$$N_2N—R^6—NH_2 \qquad (VII)$$

polykondensiert, wobei die Mol-% auf das Polyamid bezogen sind.

Die Verbindungen der Formeln III, IV, V und VII sind bekannt und teilweise käuflich. Die Diamine der Formel VI sind in der EP—B1—0001786 beschrieben.

Amidbildende Derivate sind z.B. Dihalogenide, besonders Dichloride, Dialkylester mit vorzugsweise 1 bis 4 C-Atomen im Alkyl, Diphenylester, Lactame und Dinitrile.

Die Herstellung der Polyamide erfolgt nach üblichen Methoden in hierfür üblichen Einrichtungen. Uebliche Methoden sind z.B. Schmelzpolykondensation, Polykondensation in Lösung, Grenzflächenpolykondensation und Festphasenpolykondensation und Kombinationen solcher Methoden.

Bevorzugt ist die Herstellung nach dem Schmelzpolykondensationsverfahren, das im allgemeinen in 3 Stufen ausgeführt wird. Zunächst bildet man aus im wesentlichen stöchiometrischen Mengen Dicarbonsäure und Diamin in einem geeigneten Lösungsmittel Salze.

Als inerte organische Lösungsmittel eignen sich dabei z.B. cycloaliphatische Alkohole, wie Cyclopentanol und Cyclohexanol, und vor allem aliphatische Alkohole mit bis zu 6 C-Atomen, wie Methanol, Ethanol, n-Propanol, Butanole, Pentanole und Hexanole, sowie Gemische derartiger Lösungsmittel mit Wasser.

Darauf führt eine Vorkondensation des Salzes in der Schmelze bei Temperaturen von etwa 220°C bis 320°C durch. Das Vorkondensat wird dann in der Schmelze zweckmässig unter Inertgas und Normaldruck oder im Vakuum bei etwa 220 bis 320°C polykondensiert.

Zur Erzielung höherer Molekulargewichte können feste teilkristalline Vorkondensate in fester Phase polykondensiert werden, zweckmässig im Vakuum und/oder Inertgas und bei Temperaturen, die ca. 20°C unter dem Schmelzpunkt des Polykondensates liegen.

Die Polykondensation in Lösung wird zweckmässig unter Verwendung von Dicarbonsäuredichloriden und Diaminen, gegebenenfalls unter Zusatz eines HCl-Akzeptors durchgeführt.

Die erfindungsgemässen Polyamide sind teilkristallin und zeichnen sich durch gute Hydrolysestabilität, Dimensionsstabilität und geringe Feuchtigkeitsaufnahme aus. Im Vergleich zu den teilkristalliyin Polyamiden aus Terephthalsäure und Diaminen der Formel VI weisen die erfindungsgemässen Polyamide teilweise überraschend erniedrigte Schmelzpunkte auf, wodurch sogar deren thermoplastische Verarbeitbarkeit ermöglicht wird.

Die erfindungsgemässen Polyamide können somit als Formmassen in Formgebungsverfahren für Thermoplaste, wie z.B. Spritzgiessen und Extrusion, zur Herstellung von Formkörpern verwendet werden. Ferner können Fasern und Filamente nach dem Schmelzspinnverfahren hergestellt werden.

Die vorliegende Erfindung betrifft daher auch die Verwendung dieser Polyamide in einem dieser Verfahren.

Die nachfolgenden Beispiele erläutern die Erfindung näher. DSC steht als Abkürzung für Differential-Scanning-Calorimetrie.

### Beispiel 1

In einem Kolben, der mit Rührer, Tropftrichter und Rückflusskühler versehen ist, werden 4,322 g Naphthalin-1,4-dicarbonsäure in einem Gemisch von 40 ml Wasser und 120 ml Ethanol auf Rückfluss erhitzt und dann 5,132 g 3,12-Diamino-2,13-dimethyltetradecan eingetropft und der Tropftrichter mit 20 ml Ethanol nachgespült. Nach 4 Stunden Kochen unter Rückfluss wird abgekühlt und das gebildete Salz abfiltriert. Nach Trocknung im Vakuum bei 80°C werden 8,9 g Salz erhalten (94% der Theorie). 5 g dieses Salzes werden unter Stickstoff in ein Bombenrohr eingeschlosen und in einem Salzbad 2 Stunden auf 270°C erhitzt. Dabei entsteht eine klare Schmelze, die beim Abkühlen zu einer opaken Masse erstarrt. Das Vorkondensat wird aus dem Bombenrohr entnommen und in einem Kondensationsrohr unter Durchleiten von Stickstoff 5 Stunden auf 280°C erhitzt. Beim Abkühlen kristallisiert die Schmelze zu einer opaken Masse.

Die reduzierte Lösungsviskosität gemessen als 0,5-prozentige Lösung in m-Kresol bei 25°C beträgt 0,45 dl/g.

Im DSC zeigt das Polyamid einen Schmelzpeak mit Maximum bei 239°C.

### Beispiel 2

In einer Polykondensationsapparatur wird unter Durchleiten von Stickstoff ein Gemisch von 1,9859 g

Naphthalin-1,4-dicarbonsäurediphenylester und 1,5337 g 4,13-Diamino-3,14-dimethylhexadecan im Verlaufe einer Stunde von 220° auf 280°C aufgeheizt. Dann wird Vakuum von ca. 0,1 mbar angelegt und die Temperatur eine weitere Stunde bei 280°C gehalten, um die Polykondensation voranzutreiben und das dabei freiwerdende Phenol vollständig abzudestillieren. Beim Abkühlen kristallisiert die Schmelze zu einer opaken Masse.

Schmelzpunkt (DSC): 243°C
Reduzierte Lösungsviskosität: 0,39 d/.g.

Beispiel 3

Analog Beispiel 2 wird ein Gemisch von 1,7495 g Naphthalin-1,4-dicarbonsäurediphenylester und 1,6114 g 1,10-Diamino-1,10-dicyclohexyledecan zu einem Polyamid polykondensiert.

Schmelzpunkt (DSC): 251°C
Reduzierte Lösungsviskosität: 0,55 dl/g.

Beispiel 4

Gemäss Beispiel 2 werden 2,02 g 4,13-Diamino-3,14-diethylhexadecan mit 2,37 g Naphthalin-1,4-dicarbonsäurediphenylester zu einem Polyamid polykondensiert.

Schmelzpunkt (DSC): 258°C
Reduzierte Lösungsviskosität: 0,44 dl/g.

**Patentansprüche**

1. Ein teilkristallines Polyamid aus Dicarbonsäuren, Diaminen und gegebenenfalls Aminocarbonsäuren mit einer reduzierten Lösungsviskosität von mindestens 0,3 dl/g, gemessen an einer 0,5%-igen Lösung in m-Kresol bei 25°C, dadurch gekennzeichnet, dass es aus 80 bis 100 Mol-%, bezogen auf das Polyamid, mindestens eines wiederkehrenden Strukturelementes der Formel I

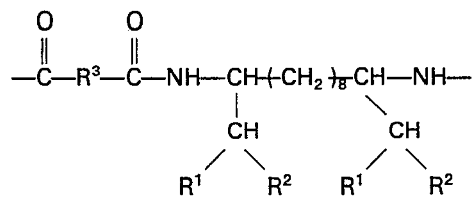
(I)

und aus 20 bis 0 Mol-% mindestens eines wiederkehrenden Strukturelementes der Formeln II und/oder IIa

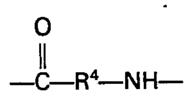
(II)

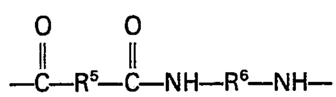
(IIa)

worin $R^1$ Alkyl mit 1 bis 4 C-Atomen und $R^2$ Alkyl mit 1 bis 8 C-Atomen oder $R^1$ und $R^2$ zusammen Tri-, Tetra- oder Pentamethylen sind, $R^3$ einen Rest der Formeln

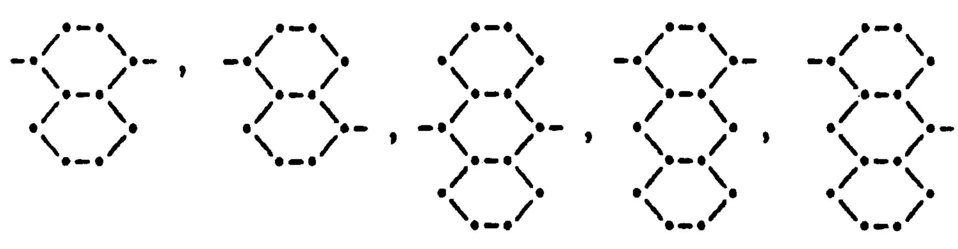

bedeutet, wobei die Sechsringe aliphatische oder aromatische Kohlenwasserstoffreste sind, $R^4$ für Alkylen mit 5 bis 11 C-Atomen steht, $R^5$ einen aliphatischen Rest mit 2 bis 12 C-Atomen oder einen aromatischen Kohlenwasserstoffrest mit 6 bis 12 C-Atomen darstellt, und $R^6$ lineares Alkylen mit 2 bis 12 C-Atomen, ein cycloaliphatischer oder araliphatischer Rest ist, besteht.

2. Ein Polyamid gemäss Anspruch 1, dadurch gekennzeichnet, dass $R^1$ und $R^2$ Methyl oder Ethyl oder $R^1$ und $R^2$ zusammen Tetra- oder Pentamethylen sind.

3. Ein Polyamid gemäss Anspruch 1, dadurch gekennzeichnet, dass $R^3$ für einen Rest der Formeln

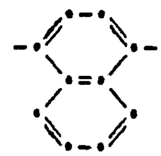

oder

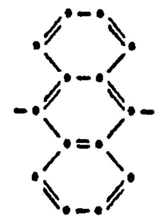

steht.

4. Ein Polyamid gemäss Anspruch 1, dadurch gekennzeichnet, dass es 0 bis 10 Mol-% Strukturelemente der Formeln II und/oder IIa enthält.

5. Ein Polyamid gemäss Anspruch 1, dadurch gekennzeichnet, dass es zu 100 Mol-% aus Strukturelementen der Formel I besteht.

6. Ein Polyamid gemäss Anspruch 1, dadurch gekennzeichnet, dass es aus Strukturelementen der Formel

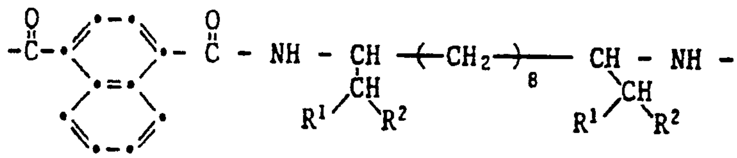

(Ia)

besteht, worin $R^1$ für Methyl und $R^2$ für Methyl oder Ethyl oder $R^1$ und $R^2$ zusammen für Tri- oder Tetramethylen stehen.

7. Ein Polyamid gemäss Anspruch 6, worin $R^1$ und $R^2$ zusammen für Pentamethylen stehen.

8. Verfahren zur Herstellung von Polyamiden gemäss Anspruch 1, dadurch gekennzeichnet, dass man 40 bis 50 Mol-% einer Dicarbonsäure der Formel III

$$HOOC—R^3—COOH \qquad (III)$$

und 10 bis 0 Mol-% einer Aminocarbonsäure der Formel IV oder einer Dicarbonsäure der Formel V

$$HOOC—R^4—NH_2 \qquad (IV)$$

$$HOOC—R^5—COOH \qquad (V)$$

oder deren polyamidbildenden Derivate, mit 40 bis 50 Mol-% eines Diamines der Formel VI

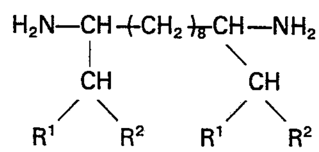

(VI)

und 10 bis 0 Mol-% eines Diamins der Formel VII

$$H_2N—R^6—NH_2 \qquad (VII)$$

polykondensiert, wobei die Mol-% auf das Polyamid bezogen sind.

9. Verwendung von Polyamiden gemäss Anspruch 1 als Formmassen im Spritzguss- oder Extrusionsverfahren zur Herstellung von Formkörpern, sowie zur Herstellung von Fasern und Filamenten nach dem Schmelzspinnverfahren.

**Revendications**

1. Polyamides partiellement cristallisés, formés d'acides dicarboxyliques, de diamines et le cas échéant d'acides aminocarboxyliques, ayant une viscosité réduite en solution d'au moins 0,3 dl/g, mesurée sur une

solution à 0,5% dans du m-crésol à la température de 25°C, et qui se caractérisent en ce qu'ils sont formés de 80 à 100 mol-%, par rapport au polyamide, d'au moins un motif répété de formule I ci-dessous:

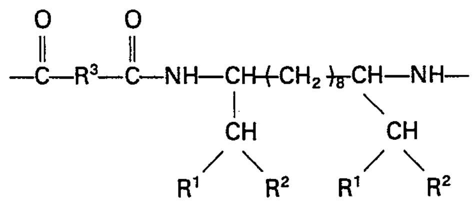

(I)

et de 20 à 0 mol-% d'un motif répété de formule II et/ou IIa:

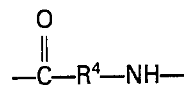

(II)

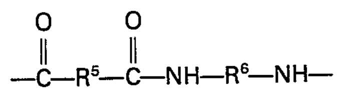

(IIa)

formules dans lesquelles $R^1$ désigne un alkyle en $C_1$ à $C_4$ et $R^2$ un alkyle en $C_1$ à $C_8$ ou bien $R^1$ et $R^2$ forment ensemble un groupe triméthylène, tétraméthylène ou pentaméthylène, $R^3$ désigne un radical de l'une des formules suivantes:

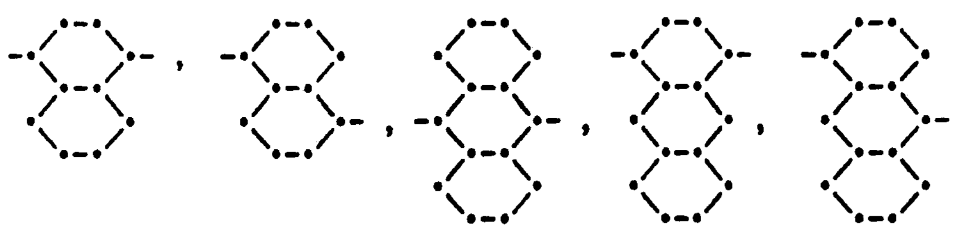

les cycles hexagonaux étant des radicaux hydrocarbonés aliphatiques ou aromatiquers, $R^4$ est un alkylène en $C_5$ à $C_{11}$, $R^5$ un radical aliphatique en $C_5$ à $C_{12}$ ou un radical d'hydrocarbure aromatique en $C_6$ à $C_{12}$, et $R^6$ un alkylène linéaire en $C_2$ à $C_{12}$ ou un radical cycloaliphatique ou araliphatique.

2. Polyamide selon la revendication 1, caractérisé en ce que $R^1$ et $R^2$ sont le groupe méthyle ou éthyle ou bien forment ensemble un groupe tétraméthylène ou pentaméthylène.

3. Polyamide selon la revendication 1, caractérisé en ce que $R^3$ est un radical de formule:

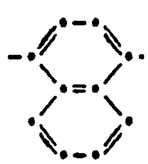

ou

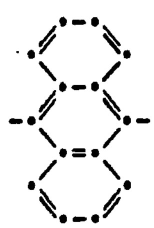

4. Polyamide selon la revendication 1, caractérisé en ce qu'il comprend de 0 à 10 mol-% des motifs de formules II et/ou IIa.

5. Polyamide selon la revendication 1, caractérisé en ce qu'il est formé de 100 mol-% de motifs de formule I.

6. Polyamide selon la revendication 1, caractérisé en ce qu'il est formé de motifs de formule:

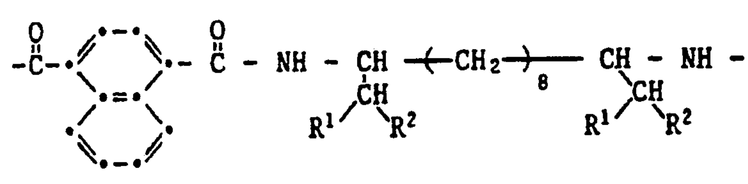

(Ia)

dans lesquels $R^1$ est le groupe méthyle et $R^2$ le groupe méthyle ou éthyle ou bien $R^1$ et $R^2$ forment ensemble un groupe triméthylène ou tétraméthylène.

7. Polyamide selon la revendication 6 dans lequel $R^1$ et $R^2$ forment ensemble un groupe pentaméthylène.

8. Procédé de préparation des polyamides selon la revendication 1, procédé caractérisé en ce que l'on soumet à une polycondensation de 40 à 50 mol-% d'un acide dicarboxylique de formule III:

$$HOOC—R^3—COOH \quad (III)$$

et de 10 à 0 mol-% d'un acide aminocarboxylique de formule IV ou d'un acide dicarboxylique de formule V:

$$HOOC—R^4—NH_2 \quad (IV)$$

$$HOOC—R^5—COOH \quad (V)$$

ou de leurs dérivés pouvant former des polyamides, avec de 40 à 50 mol-% d'une diamine de formule VI:

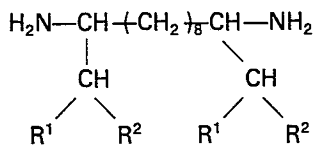
(VI)

et de 10 à 0 mol-% d'une diamine de formule VII:

$$H_2N—R^6—NH_2 \quad (VII)$$

tous les pourcentages molaires étant rapportés au polyamide.

9. Emploi des polyamides selon la revendication 1 comme matières à mouler dans les procédés de moulage par injection ou d'extrusion pour la fabrication d'objets moulés, ainsi que pour en former des fibres et filaments par le procédé de filage à l'état fondu.

**Claims**

1. A partially crystalline polyamide formed from dicarboxylic acids, diamines and optionally aminocarboxylic acids and having a reduced solution viscosity of at least 0.3 dl/g, measured on a 0.5% solution in m-cresol at 25°C, which polyamide consists of 80 to 100 mol%, relative to the polyamide, of at least one recurring structural element of the formula I

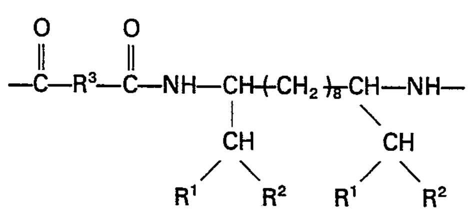
(I)

and 20 to 0 mol% of at least one recurring structural element of the formulae II and/or IIa

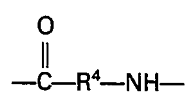
(II)

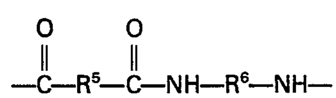
(IIa)

in which $R^1$ is alkyl having 1 to 4 C atoms, and $R^2$ is alkyl having 1 to 8 C atoms, or $R^1$ and $R^2$ together are tri-, tetra- or pentamethylene, $R^3$ is a radical of the formula

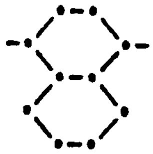 , 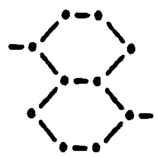 , 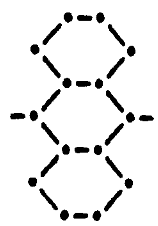 , 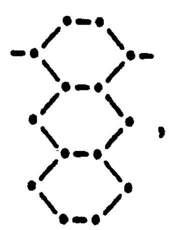 , 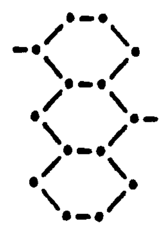

the six-membered rings being aliphatic or aromatic hydrocarbon radicals, $R^4$ is alkylene having 5 to 11 C atoms, $R^5$ is an aliphatic radical having 2 to 12 C atoms, or an aromatic hydrocarbon radical having 6 to 12 C

atoms, and $R^6$ is straight-chain alkylene having 2 to 12 C atoms, or a cycloaliphatic or araliphatic radical.

2. A polyamide according to claim 1, wherein $R^1$ and $R^2$ are methyl or ethyl, or $R^1$ and $R^2$ together are tetra- or pentamethylene.

3. A polyamide according to claim 1, wherein $R^3$ is a radical of the formulae

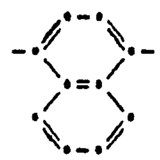

or

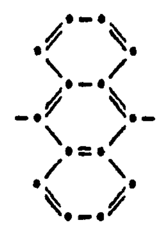

4. A polyamide according to claim 1, which contains 0 to 10 mol% of structural elements of the formulae II and/or IIa.

5. A polyamide according to claim 1, which consists of 100 mol% of structural elements of the formula I.

6. A polyamide according to claim 1, which consists of structural elements of the formula

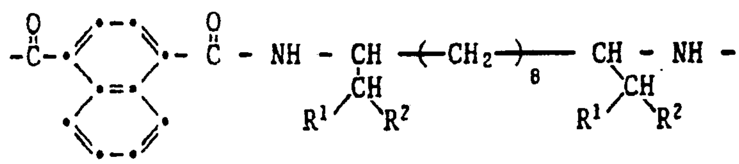

(Ia)

in which $R^1$ is methyl and $R^2$ is methyl or ethyl, or $R^1$ and $R^2$ together are tri- or tetramethylene.

7. A polyamide according to claim 6, in which $R^1$ and $R^2$ together are pentamethylene.

8. A process for producing a polyamide according to claim 1, which comprises polycondensing 50 to 50 mol% of a dicarboxylic acid of the formula III

$$HOOC—R^3—COOH \quad (III)$$

and 10 to 0 mol% of an aminocarboxylic acid of the formula IV or of a dicarboxylic acid of the formula V

$$HOOC—R^4—NH_2 \quad (IV)$$

$$HOOC—R^5—COOH \quad (V)$$

or of the polyamide-forming derivatives thereof, with 40 to 50 mol% of a diamine of the formula VI

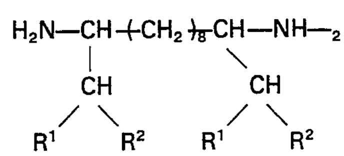

(VI)

and 10 to 0 mol% of a diamine of the formula VII

$$H_2N—R^6—NH_2 \quad (VII)$$

the mol% values being relative to the polyamide.

9. Use of a polyamide according to claim 1, as a moulding compound for producing moulded articles in the injection moulding or extrusion process, and also for producing fibres and filaments by the melt-spinning process.